(19) Europäisches Patentamt / European Patent Office / Office européen des brevets

(11) **EP 3 492 822 B1**

(12) **EUROPEAN PATENT SPECIFICATION**

(45) Date of publication and mention
of the grant of the patent:
**30.09.2020 Bulletin 2020/40**

(51) Int Cl.:
*F24D 19/10* $^{(2006.01)}$        *F24F 5/00* $^{(2006.01)}$

(21) Application number: **18208720.5**

(22) Date of filing: **27.11.2018**

(54) **CONTROL METHOD AND DEVICE FOR A HEATING SYSTEM OR COOLING SYSTEM**

STEUERUNGSVERFAHREN UND -VORRICHTUNG FÜR EIN HEIZSYSTEM ODER KÜHLSYSTEM

PROCÉDÉ ET DISPOSITIF DE COMMANDE POUR UN SYSTÈME DE CHAUFFAGE OU DE REFROIDISSEMENT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.11.2017 GB 201719921**

(43) Date of publication of application:
**05.06.2019 Bulletin 2019/23**

(73) Proprietor: **Minibems Limited**
**Exeter, Devon EX1 3LJ (GB)**

(72) Inventors:
• **PARRICK, Finian**
**Exeter, Devon EX1 3LJ (GB)**
• **SEWELL, Richard**
**Exeter, Devon EX1 3LJ (GB)**
• **WHITE, Benjamin**
**Exeter, Devon EX1 3LJ (GB)**

(74) Representative: **Jefferies, Matthew Thomas**
**Marks & Clerk LLP**
**15 Fetter Lane**
**London EC4A 1BW (GB)**

(56) References cited:
EP-A1- 2 871 423          EP-A2- 1 770 469
WO-A1-2008/039065      DE-A1-102009 051 209
DE-C1- 19 710 905

**Description**

TECHNICAL FIELD

The present disclosure relates to control systems for heat transfer systems. In particular, but without limitation, this disclosure relates to control systems for heating or cooling systems.

BACKGROUND

There is an increasing desire to minimise energy consumption in domestic as well as office and industrial environments. A large proportion of energy usage arises out of the use of heating systems and the supply of heated water. Accordingly, the ability to be able to control the underlying system that provides these in order to optimise energy usage is an important area of ongoing activity.

Typically, for example, a central heating system can be used to provide heating and these systems, particularly in the domestic environment, broadly consist of either wet systems that utilise a boiler/heat exchanger and radiators, warm air systems in which, as the name implies, warm air is circulated, or storage heaters that release stored heat over a prolonged period of time.

In a wet central heating system for example, hot water circulates through a system of pipes that connect to radiators that heat the environment in which they are placed by warm air convection. In order to provide the hot water for the radiators, a boiler burns a fuel, which is typically natural gas. Generally, such boilers use condensing technology in which heat from exhaust gases that would normally be released into the atmosphere through a flue is used in a heat exchanger. This cools and condenses the gases back to liquid form. That is, to use this latent heat, the water vapour from the exhaust gas is turned into liquid condensate.

In order to make the most of the latent heat within the condensate, condensing boilers use a relatively large heat exchanger, or sometimes a secondary heat exchanger in which return water from the heating system, which is at a lower temperature than the heated water leaving the system, is warmed using the condensate.

Due to this process, a condensing boiler is able to extract more heat from the fuel it uses than a standard efficiency boiler. It also means that less heat is lost through the flue gases. However, typically, gas boilers can only condense latent heat at a return temperature of around 55°C or less.

Accordingly, in addition to the general aim of reducing fuel consumption using smart technology, it is also desirable to be able to maximise boiler efficiency by regulating certain parameters of the return fluid.

US 2015/0122475 A1 discloses a regulating method for a heating and/or cooling system that uses at least one load circuit, through which a fluid as a heat transfer medium flows and switches the at least one load circuit on and off in dependence on a room temperature in a room to be thermally regulated by the at least one load circuit. A feed temperature of the fluid fed to the at least one load circuit is set in dependence on the relative switch-on duration of the at least one load circuit. A manifold device is also provided for a heating and/or cooling system with a control device for carrying out such a regulating method.

WO 2008/039065 A1 discloses a control device comprising a heat meter of the invoicing type and a control unit connected to the heat meter and the control unit is connected to the heat meter and adapted to control a fluid flow adjusting unit subject to the power determined by the heat meter.

BRIEF DESCRIPTION OF THE DRAWINGS

Arrangements of the present invention will be understood and appreciated more fully from the following detailed description, made by way of example only and taken in conjunction with drawings in which:

Fig. 1 shows a heating system according to an embodiment;

Fig. 2 shows how gas boiler efficiency changes with return temperature for a typical boiler in a domestic environment;

Fig. 3 shows a control system for controlling the heat transfer system according to an embodiment;

Fig. 4 shows a weather compensation curve according to an embodiment; and

Fig. 5 shows a flow rate control method for a heating system according to an embodiment.

SUMMARY OF INVENTION

According to a first aspect of the invention there is provided a control system for a heat transfer system. The control system comprises: an input for receiving one or more signals indicating a flow rate of heat transfer fluid within the heat transfer system and an amount of heat transferred between the heat transfer fluid and a medium being heated or cooled; an output for issuing control signals to change the flow rate within the heat transfer system; and a controller. The one or more signals comprise signals indicating an input temperature of the heat transfer fluid into the heat transfer system, an output temperature of the heat transfer fluid out of the heat transfer system and a temperature of the medium. The controller is configured to: determine a target output temperature for the heat transfer fluid for achieving a predefined amount of usable heat transferred between the heat transfer system and the medium based on the one or more received signals; determine a target flow rate for achieving the target output temperature; and issue a control signal via the output terminal to adjust the flow rate within the heat transfer system to achieve the target output temperature. Determining a target flow rate for achieving the target output temperature comprises: determining the power transferred between the heat transfer system and the medium based on the flow rate, the input temperature, the output temperature and a specific heat capacity of the heat transfer fluid; determining a temperature difference between the fluid and the medium; determining the thermal resistance of the medium based on the temperature difference and the power; and determining the target flow rate based on the power and the thermal resistance.

By controlling the flow rate to achieve a target output temperature, the control system is able to guarantee a set level of efficiency and is able to adapt to changing conditions more quickly with fewer oscillations than control based solely on temperature.

The control signal for adjusting the flow rate may be issued to a valve within the heat transfer system for restricting the flow rate, or to a pump for increasing the flow rate.

The heat transfer system may be a heating system or cooling system. A heating system is able to transfer heat to a medium, whilst a cooling system is able to transfer heat from a medium. The medium being heated or cooled could be the air within a room being heated or cooled, or any other region or material being heated or cooled. The heat transfer fluid may be a liquid (such as water), a gas (such as tetrafluoroethane) or a combination of both liquid and gas.

The signals may be indicative the heat transferred between the heat transfer fluid and the medium as they can be used to determine the heat transferred, for instance, the heat transferred may be calculated by the control system based on the input temperature, the output temperature, the temperature of the medium and the flow rate. Alternatively, the control system could simply receive information detailing the heat transferred (e.g. information calculated by separate controller).

According to a further arrangement, the temperature difference is a difference between an average temperature of the fluid within the system and the temperature of the medium. The average temperature may be the mean of the input and output temperatures.

According to a further arrangement, determining the target flow rate comprises: determining a target output temperature based on the input temperature, the temperature of the medium and the predefined amount of usable heat; determining a target temperature difference between the heat transfer fluid and the medium; and, determining a target amount of power to be transferred between the heat transfer fluid and the medium based on the target temperature difference and the target output temperature. The target flow rate is determined based on the target amount of power to be transferred, the input temperature, the target output temperature and the specific heat capacity of the heat transfer fluid.

According to a further arrangement, the target temperature difference is determined based on the input temperature, the target output temperature and the temperature of the medium. The target temperature difference may be the between a target average fluid temperature and the temperature of the medium. That is, the target temperature difference may be equal to the temperature of the medium subtracted from the mean of the input temperature and the target output temperature.

According to a further arrangement, the predefined amount is a predefined fraction of usable heat. This may be an intended fraction of the total heat passing through the system that is to be transferred to or from the medium.

According to a further arrangement, the heat transfer system is connected to a fluid source that provides the heat transfer fluid and controls the input temperature of the heat transfer fluid. The controller is further configured to: determine whether the input temperature of the heat transfer fluid needs to be increased or decreased; and, in response to determining that the input temperature should be increased, issue a request to the fluid source to increase the input temperature; or, in response to determining that the input temperature should be decreased, issue a request to the fluid source to decrease the input temperature. Accordingly, the control system may be configured to issue requests to increase or decrease the input temperature.

According to a further arrangement, the controller is configured to: determine that the input temperature needs to be increased in response to a determination that the input temperature is below a first predetermined target input temperature; or determine that the input temperature needs to be decreased in response to a determination that the input temperature is above a second predetermined target input temperature. One or both of the first and second predetermined target input temperature thresholds may be used. Accordingly, both the first and second predetermined target input temperatures may be utilised to define a temperature region within which the input temperature does not be changed.

According to a further arrangement, the input terminal is configured to receive a signal indicating an external temperature, the controller is configured to determine the target input temperature based on the external temperature, and the request to the fluid source comprises a request to increase or decrease the input temperature at least to the target input temperature. This may be based on a predefined relationship between input temperature and external temperature based on expected heat loss. The external temperature may be an outside temperature, or a temperature of any other region that may conduct heat to or from the medium.

According to a further arrangement, the request to the fluid source comprises a request for a temperature equal to the target input temperature plus an expected temperature loss during delivery of the heat transfer fluid to the heat transfer system or minus an expected temperature gain during delivery of the heat transfer fluid to the heat transfer system. Accordingly, heat loss may be taken into account when heating or heat gain may be taken into account when cooling.

According to a further arrangement, the heat transfer system comprises a plurality of heat transfer subsystems, the control system is in communicative communication with a number of downstream control systems, wherein each downstream control system is configured to control a respective heat transfer subsystem, and the controller is configured to determine that the input temperature should be increased or decreased in response to the controller receiving a request to increase or decrease the input temperature from one of the downstream control systems. Accordingly, additional downstream control systems may be provided to controller smaller heat transfer subsystems within the overall heat transfer system. The control system can take into account temperature requests from the downstream control systems.

According to a further arrangement, the heat transfer system is a heating system and the controller is configured to: receive from one or more of the downstream control systems, one or more corresponding requests to increase the input temperature, each request comprising a requested temperature; and, in response to receiving one or more requests, determine a maximum requested temperature from the one or more requests and the target input temperature. The request to the fluid source comprises a request for at least the maximum requested temperature.

According to a further arrangement, the request to the fluid source comprises a request for a temperature equal to the maximum requested temperature plus an expected temperature loss during delivery of the heat transfer fluid to the heat transfer system.

According to a further arrangement, the heat transfer system is a cooling system and the controller is configured to: receive from one or more of the downstream control systems, one or more corresponding requests to decrease the input temperature, each request comprising a requested temperature; and, in response to receiving one or more requests, determine a minimum requested temperature from the one or more requests and the target input temperature. The request to the fluid source comprises a request to reduce the input temperature at least to the minimum requested temperature.

According to a further arrangement, the request to the fluid source comprises a request for a temperature equal to the minimum requested temperature minus an expected temperature gain during delivery of the heat transfer fluid to the heat transfer system.

According to a further arrangement, there is provided a heat transfer system comprising a control system as described herein.

According to a second aspect of the invention there is provided a control method for a heat transfer system, the control method being performed in a control system comprising a controller, an input for receiving signals from the heat transfer system and an output for issuing control signals to change the flow rate within the heat transfer system. The control method comprises the controller: receiving one or more signals indicating a flow rate of heat transfer fluid within the heat transfer system and an amount of heat transferred between the heat transfer fluid and a medium being heated or cooled; determining a target output temperature for the heat transfer fluid for achieving a predefined amount of usable heat transferred between the heat transfer system and the medium based on the one or more received signals; determining a target flow rate for achieving the target output temperature; and issuing a control signal to adjust the flow rate within the heat transfer system to achieve the target output temperature. The one or more signals comprise signals indicating an input temperature of the heat transfer fluid into the heat transfer system, an output temperature of the heat transfer fluid out of the heat transfer system and a temperature of the medium. Determining a target flow rate for achieving the target output temperature comprises: determining the power transferred between the heat transfer system and the medium based on the flow rate, the input temperature, the output temperature and a specific heat capacity of the heat transfer fluid; determining a temperature difference between the fluid and the medium; determining the thermal resistance of the medium based on the temperature difference and the power; and determining the target flow rate based on the power and the thermal resistance.

According to a further arrangement, there is provided a computer readable medium comprising instructions that, when executed by a computer, cause the computer to enact a method as described herein. The computer readable medium may be a non-transitory computer readable medium.

DETAILED DESCRIPTION

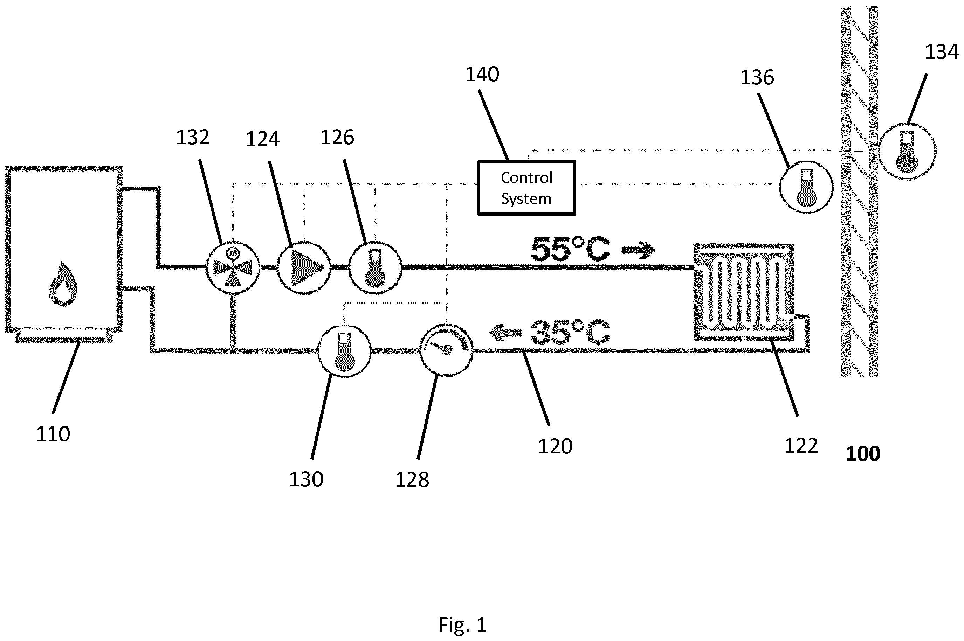

Fig. 1 shows a heating system according to an embodiment. The heating system 100 comprises a boiler 110, a heat transfer system 120 and a control system 140. The heat transfer system 120 comprises a series of conduits connected to the boiler for conveying a heat transfer fluid from the boiler, through the system, and back to the boiler in order to transfer heat to a building. In the present embodiment, the heat transfer fluid is water, although alternative heat transfer fluids may be used.

The heat transfer system 120 comprises a heat transfer section 122 configured to transfer heat from the heat transfer fluid to a medium being heated, in this case, the air within the building. In the present embodiment, the heat transfer section 122 comprises a radiator.

Heat transfer fluid is conveyed from the boiler 110 to the radiator 122 via a supply line. A pump 124 is connected to the supply line to pump fluid through the system. A first temperature sensor 126 is connected to the supply line to measure the temperature of the fluid input into the heat transfer system (the flow temperature).

Heat transfer fluid is returned to the boiler 110 from the radiator 122 by a return line. A second temperature sensor 130 is connected to the return line to measure the temperature of the heat transfer fluid before it returns to the boiler (the return temperature).

A flow rate sensor 128 is connected to heat transfer system to measure the flow rate within the system. In the present case, the flow rate sensor 128 is connected to the return line; however, the flow rate sensor 128 may equally be connected to the supply line.

In the present embodiment, a three-way mixing valve 132 connects the supply and return lines to each other before they connect to the boiler 110. This allows the flow temperature to be controlled by controlling the amount of return fluid that is mixed into the supply line. This also allows the supply of heat transfer fluid to be controlled so that the flow rate can be varied, and so that it can be cut off at times when heating is not required.

In alternative embodiments, direct control of the flow temperature may not be required. Accordingly, the three-way mixing valve may be replaced with a normal valve for controlling the flow rate and the supply of heat transfer fluid (without any ability to mix the supply with the return fluid).

The control system 140 is communicatively connected to the first 126 and second 130 temperature sensors, the pump 124, the mixing valve 132 and an external temperature sensor 134. The external temperature sensor 134 is located outside of the area being heated (e.g. outside of the building) and measures the external temperature. This allows the control system 140 to determine a target flow temperature for the heat transfer system based on the expected heat loss for area being heated.

The control system 140 is also communicatively connected to a third temperature sensor 136. The third temperature sensor 136 measures the temperature of the region being heated or cooled. The control system 140 may store a desired temperature for the region. When the temperature of the region differs from the desired temperature by more than a predefined amount, then the control system may engage the heat transfer system to heat or cool the system (depending on the type of heat transfer system and change in temperature that is required) to reach the desired temperature.

For instance, if the heat transfer system is a heating system and the temperature is less than a predetermined value, then the control system 140 may engage the heat transfer system to heat the region. Alternatively, if the heat transfer system is a cooling system and the temperature is more than a predetermined value, then the control system 140 may engage the heat transfer system to cool the region. The heat transfer system may therefore be either a heating system, a cooling system or may have both heating and cooling capabilities.

A cooling system works in much the same way as a heating system, but cool fluid is input into the system to absorb heat from the region being cooled. The fluid is therefore heated within the system and warmer fluid is output.

The control system 140 receives flow rate information from the flow rate sensor 128 and temperature information from the first 126 and second 130 temperature sensors and the external temperature sensor 134. The control system 140 uses this information to control the pump 124 and three way mixing valve 132 to adjust the flow rate within the heat transfer system 100. The control system 140 may also be in communicative connection with the boiler so that requests for additional heat can be sent to the boiler.

In heating systems, it is important to control the temperature of the fluid (e.g. water) that returns to the boiler (the return temperature). The return temperature affects the efficiency of the heating system.

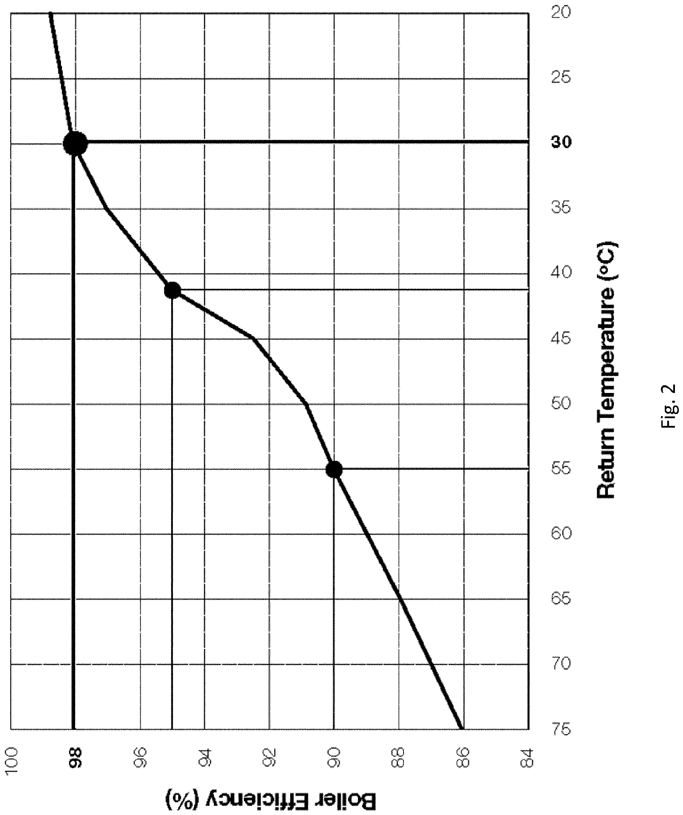

Fig. 2 shows how gas boiler efficiency changes with return temperature for a typical boiler in a domestic environment, although an analogously shaped plot would arise in other environments. Generally speaking, gas boiler efficiency is directly related to return temperature. As can be seen, the efficiency increases as the return temperature to the boiler decreases.

Whilst decreasing the return temperature increases efficiency, this can also lead to a reduction in the power that is flowing through the system. This can lead to the system being unable to effectively heat the region that it is serving. Nevertheless, this reduction in power can be offset by increasing the flow temperature.

Accordingly, a balance must be struck between decreasing the return temperature, and thereby increasing efficiency, and providing sufficient power through the system to provide effective heating.

Cooling systems also benefit from accurate control of the return temperature. Cooling systems generally use heat pumps that operate more efficiently when the return temperature is higher.

It is possible to control the return temperature via two mechanisms. The first is to control the temperature of the fluid entering the system (the flow temperature). The second is to control the speed that fluid passes through the system (the flow rate).

There are a number of benefits to using flow rate to control return temperature:

1. Target temperatures are reached more quickly than if the return temperature was monitored directly. This is due to the fact that the impact of control upon flow rates is much quicker than the impact on temperatures (due to the large thermal inertia of the heating system).

2. Target temperatures can be reached without oscillation as a result of the additional channel of faster feedback provided by flow rate information.

3. The control system can be developed to provide non-oscillatory control for a large spectrum of heating or cooling systems. Temperature only control mechanisms would have to be tuned for a certain type of heating system and then subsequently retuned if placed in a different operating environment. Accordingly, by using flow rate, the control system is able to control a larger variety of heating or cooling systems without requiring significant recalibration.

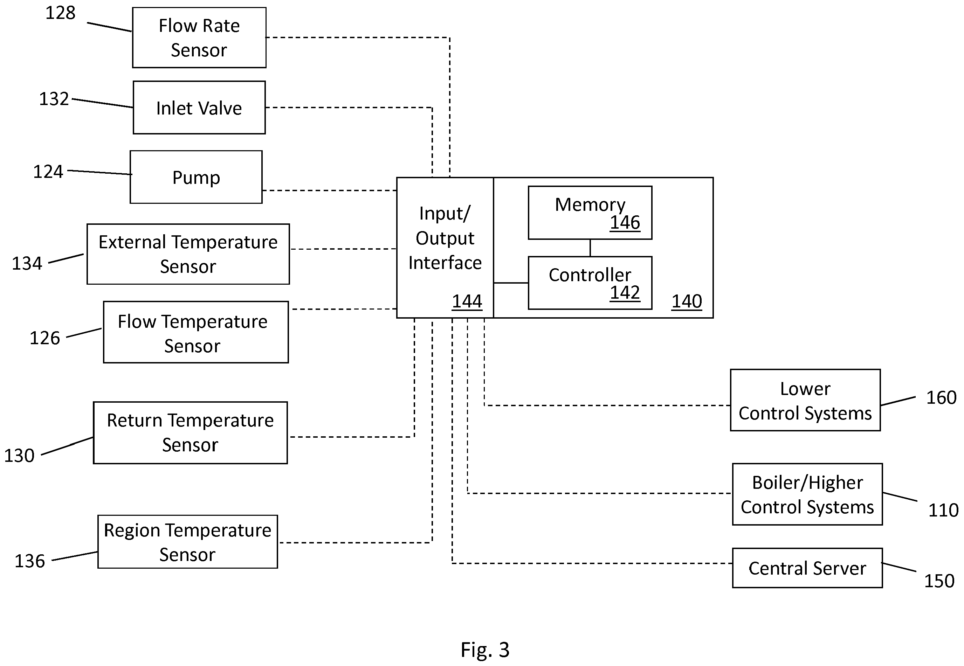

Fig. 3 shows a control system for controlling the heat transfer system according to an embodiment. The control system 140 comprises a controller 142, an input/output interface 144 and memory 146. The controller 142 is configured to implement the control processes described herein according to computer executable software stored in memory 146.

The control system 140 is connected to a number of sensors, valves, and related control systems via the input/output interface 144. These connections may be via a wireless connection (such as WiFi or Bluetooth) or a wired connection (such as electric or fibre-optic). Whilst a combined input/output interface is shown, separate input and output interfaces may be utilised.

As discussed above, the control system 140 is connected to the flow sensor 128 that provides the control system 140 with measurements of the flow rate of the fluid passing through the heat transfer system 100. The control system 140 is also connected to the flow temperature sensor 126 and the return temperature sensor 130 that provide measurements of the flow temperature and return temperature respectively. Furthermore, the external temperature sensor 134 provides measurements of the region immediately outside the region being heated or cooled (the external temperature) and the region temperature sensor 136 provides temperature measurements for the region being heated or cooled. For instance, where a building is being heated or cooled, the external temperature sensor takes measurements of the external temperature outside of the building.

The controller 142 is configured to process the received measurements and determine a target flow rate. The controller 142 then issues control signals to the pump 124 and/or an inlet valve for the heat transfer system (in the case of the system of Fig. 1, the inlet valve is the three-way mixing valve 134), via the input/output interface 144, to adjust the flow rate to match the target flow rate.

The controller 142 is also configured to determine a target flow temperature and to issue control signals to adjust the flow temperature. In the situation where the heat transfer system is able to adjust the flow temperature itself (as in Fig. 1 through the use of the three-way mixing valve 132), and the control signals are issued to the heat transfer system (e.g. to the three way mixing valve 132). Where the heat transfer system cannot control the flow temperature to reach the target flow temperature (e.g. if the target flow temperature is above the temperature of the fluid provided by the boiler, or if the heat transfer system cannot control the flow temperature) and the control system 140 issues control signals to the heat source 110 to increase the temperature of the fluid provided by the heat source 110.

In addition to providing a means for connecting to various components, the input/output interface may also provide a means for the user to input commands. For instance, the input/output interface 144 itself may comprise a display and user input means (e.g. a keyboard, buttons, or touch screen interface) that allows the user to check the status of the heat transfer system and adjust settings (e.g. the desired temperature).

The control system 140 is also communicatively connected to a central server 150. System measurements and settings are uploaded to the central server 140 so that the user (e.g. a heating engineer or a consumer) can view the status of the system and edit the system configuration. For instance, a tenant may adjust the desired temperature of various rooms. Alternatively, a heating engineer may access the system to determine if there are any issues with the system and reconfigure the system remotely if needs be. This avoids the need for the engineer to visit the site in order to diagnose and correct issues.

Multiple layers of control systems may be implemented. Whilst only one layer would need to control the flow rate, one or more lower control layers may be implemented to monitor heat transfer subsystems and to issue requests where additional heat is required. A hierarchical structure may be used, where the control system 140 is connected to one or more lower control systems 160, each controlling its own respective heat transfer subsystem. In this way a chain of control systems may be formed.

The lower control systems 160 are configured to manage subsidiary heat transfer systems that fall within the overall scope of the heat transfer system 120 managed by the control system 140. For instance, the control system 140 may manage the heating system for a floor in a block of flats, and a number of lower control systems 160 may be provided that each manage the heating of the flats on that floor. Across the building, a number of control systems 140 may be utilised (for instance, one per floor). Each control system 140 may report to a higher control system 110 or may be connected directly to the boiler 110 for the building.

Each lower control system 160 is configured to issue heat requests to their respective control system 140 in the event that they cannot reach their respective target flow temperature. Each heat request includes a requested flow temperature. The requested flow temperature is equal to the target flow temperature added to a corresponding heat loss factor. The heat loss factor is the expected temperature drop between the temperature source and the respective heat transfer system. The temperature source for the heat transfer subsystems managed by the lower control systems 160 is the input for the heat transfer system managed by the control system 140. The temperature source for the heat transfer system may be the boiler or may be the heat transfer system for a higher layer of control.

The control system 140 is configured to receive the heat requests and determine the maximum target flow temperature that is required. The maximum target flow temperature is the maximum of the target flow temperatures requested by the lower control systems 160, and the target flow temperature for the control system 140.

The control system 140 then determines whether it can serve the maximum target flow temperature without requesting additional heat from its respective heat source. If so, then it adjusts the flow temperature to meet the maximum flow temperature. If not, then the control system 140 issues a request up the chain for additional heat. This could be to a higher control system or directly to the ultimate heat source (e.g. a boiler). The temperature requested from the heat source 140 is equal to the maximum target flow temperature added to a corresponding heat loss factor for the heat transfer system.

Accordingly, by collating and passing heat request up the chain of control, control signals can be sent to the ultimate source of heat (e.g. a boiler) in order to increase the flow temperature to serve the needs of the heat transfer systems.

In addition to the above, each layer may be provided with a predefined maximum possible flow temperature. If the maximum target flow temperature is greater than the masts possible flow temperature, than the respective control system determines that the heat request cannot be served. In this case, the control system may not issue a heat request (or may issue a heat request equal to the maximum possible flow temperature). In some embodiments, an alert may be issued to the user to inform them that the maximum flow temperature has been reached.

The required flow temperature may be linked to the outside temperature. This allows the system to compensate for additional heat losses due to cooler weather.

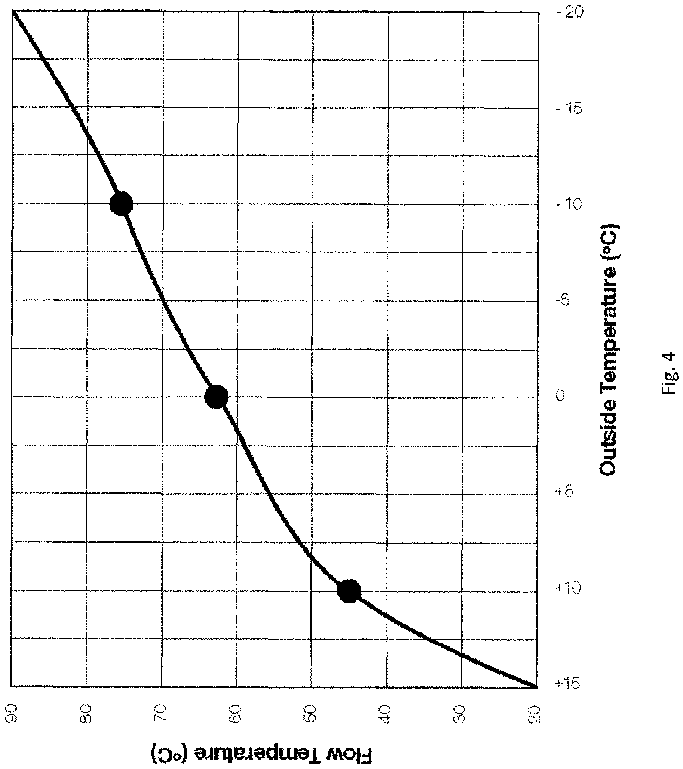

Fig. 4 shows a weather compensation curve according to an embodiment. The weather compensation curve is stored in the memory 146 to allow the control system to determine a target flow temperature based on external temperature readings taken from the external temperature sensor 134. The weather compensation curve provides a predefined relationship between flow temperature and external temperature. The weather compensation curve may be stored as a curve (e.g. a list of coordinates on a curve) or as a mathematical function.

Flow temperature control is performed independently of flow rate control. The control system 140 adjusts the flow temperature in order to meet the target flow temperature (taking into account heat requests from lower control systems 160) as discussed above. The control system also adjusts the flow rate in parallel to adjusting the flow temperature in order to maintain a set level of efficiency.

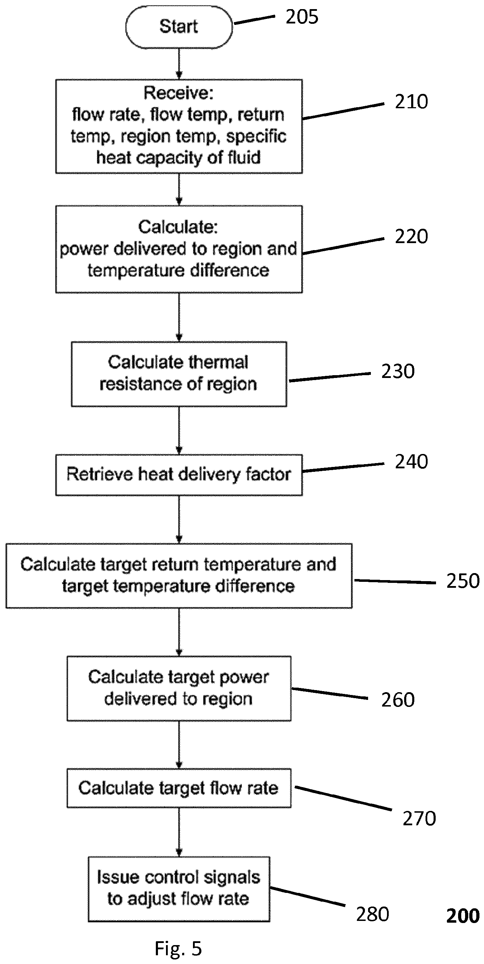

Fig. 5 shows a flow rate control method for a heating system according to an embodiment. The method 200 starts 205 when it is determined that heat needs to be provided to the region. As discussed above, this can be when the region temperature drops below a threshold level. The method 200 runs continuously, in that the heating system is continuously being monitored and the flow rate is repeatedly adjusted until the region has reached the desired temperature.

At the first stage 210 the control system receives measured values for the current flow rate, flow temperature, return temperature, region temperature and the specific heat capacity of the heating fluid. The specific heat capacity is a predefined value that may be stored in memory 146.

The control system then uses the received values to calculate 220 the power currently being delivered to the region by the heating system and the current temperature difference between the region and the heat transfer section (e.g. radiator 122) of the heating system.

The power delivered into the region (*MeasuredPower*) is the flow rate multiplied by the difference between the flow and return temperatures all multiplied by the specific heat capacity of the fluid:

$$MeasuredPower = flowRate \times (flowTemp-returnTemp) \times specificHeatCapacity$$

where *flowRate* is the flowrate within the heating system, *flowTemp* is the flow temperature, *returnTemp* is the return temperature and *specificHeatCapacity* is the specific heat capacity of the fluid.

The temperature difference (*MeasuredTempDelta*) between the region and the heat transfer section is:

$$MeasuredTempDelta = ((flowTemp + returnTemp)/2) - roomTemp$$

That is, the temperature difference is the difference between the average temperature of the heating fluid (based on the flow and return temperatures) and the region temperature (*roomTemp*).

The control system 140 then determines 130 the thermal resistance of the region being heated. The thermal resistance (*MeasuredResistance*) is the power delivered into the region divided by the temperature difference:

$$MeasuredResistance = MeasuredTempDelta/MeasuredPower$$

The controller 142 then retrieves a heat delivery factor (*heatDeliveryFactor*) setting. This may be retrieved from memory 146 or from an external source such as the central server 150. The heat delivery is a value from 0 to 1 that defines the fraction of the usable heat that is to be delivered from the heating system to the region.

A high factor (near 1) results in a very efficient system with low flow rates where the water returning from the radiator is much cooler than the water entering. Having said this, the low flow rates mean that less power is passing through the system. Accordingly, the system may be unable to heat to high temperatures.

A low factor (near 0) results in a large amount of power passing through the system and being supplied to the region, with high flow rates and a radiator which is uniformly hot. This allows a system to heat to high temperatures; however, the low heat delivery factor also results in high return temperatures, which reduce the efficiency of the system.

Accordingly, the heat delivery factor is set to balance the requirements for the region and the overall efficiency of the system. Generally, the heat delivery factor is set to the highest number possible whilst still providing sufficient heat for the region being served.

The heat delivery can be considered a proxy for the target return temperature. For instance, a heat delivery factor of 0.5 would result in a return temperature that is halfway between the flow temperature and the region temperature. Control using the heat delivery is more efficient than control using a target return temperature. This is because the flow temperature is likely to change over time which would result in a change of target return temperature. By utilising the heat delivery factor, a single value can be stored that ensures a set level of efficiency and power consumption.

Once the heat delivery factor (*heatDeliveryFactor*) has been retrieved, the control system calculates 250 the target return temperature and target temperature difference between the region and the transfer section.

The target return temperature (*TargetReturnTemp*) is:

$$TargetReturnTemp = flowTemp - (heatDeliveryFactor * (flowTemp - roomTemp))$$

That is, the target return temperature is the difference between the flow and region temperatures all multiplied by the heat delivery factor and all subtracted from the flow temperature.

The target temperature difference (*TargetRoomDelta*) between the region and the heat transfer section is:

$$TargetRoomDelta = ((flowTemp + TargetReturnTemp)/2) - roomTemp$$

That is, the target temperature difference is the region temperature subtracted from the average of the flow and target return temperatures.

The control system then calculates 260 the target power (*TargetRoomPower*) to be delivered into the region (260). This target power is the target power that should be delivered to the region to provide the predefined proportion of usable heat to the region. The target power is:

$$TargetRoomPower = TargetRoomDelta/MeasuredResistance$$

That is, the target power is the target temperature difference divided by the thermal resistance of the region.

The control system then calculates 270 the target flow rate that would achieve the target power:

$$TargetFlowRate = \frac{TargetRoomPower}{(flowTemp - TargetReturnTemp) * SpecificHeatCapacity}$$

That is, the target flow rate is the target power divided by both the specific heat capacity and the difference between the flow temperature and the target return temperature.

The control system then issues control signals 280 to the heating system to set the flow rate to the target flow rate.

By controlling the flow rates to provide a set amount of heat to the region being heated, the methods described herein provide a more stable and efficient means of managing a heating system. Adjusting flow rates allows the system to adapt more quickly to changing heat requirements and to avoid oscillations within the system after adaptation. Moreover, by utilising heat delivery factor, the efficiency of the heating system may be maintained whilst ensuring sufficient heat is provided.

Whilst some of the above embodiments relate to control systems for heating systems, the control methodology described herein applies equally to any form of heat transfer system, such as cooling systems (e.g. air conditioning).

For instance, instead of issuing heat requests, a cooling system may instead issue cooling requests that include a target flow temperature that the heat transfer fluid should be cooled to. As with the heating requests, the control system might aggregate a number of cooling requests from heat transfer subsystems. In this case, the control system would choose the minimum requested target flow temperature. The cooling request may request that the flow temperature is cooled at least to the minimum requested target flow temperature. That is, the request can be for a flow temperature that is less than or equal to the minimum requested target flow temperature.

The control system might take into account heat gain of the heat transfer fluid before it reaches the heat transfer system. Accordingly, the control system may request a flow temperature equal to the minimum requested target flow temperature minus an expected temperature gain.

Flow control can be implemented in cooling systems in a similar manner to that described above. By monitoring the heat transfer to the heat transfer fluid, the flow rate can be adjusted to result in a target return temperature to ensure a required efficiency. The above equations may be utilised to calculate target return temperatures or target flow rates as the negative values provided by changing from heating to cooling cancel out. Alternatively, the equations can be adapted by reversing any subtraction of temperatures in light of the change from heating to cooling.

Furthermore, whilst some of the above embodiments relate to heating systems that utilise water heated by a boiler, alternative heat sources may be utilised (e.g. heat pumps) and alternative heat transfer fluids may be utilised (e.g. heating/cooling fluid). The heat transfer fluid may be a gas or a liquid.

The above embodiments relate to a control system that is situated locally to the heat transfer system. Whilst the control system may connect to the central server to allow configuration information to be updated, it also stores this information locally. Accordingly, the controller is able to continue to manage the heat transfer system even where the connection to the central server is lost.

Alternatively, it is possible to implement the control methodology described herein on the central server itself. The central server could receive the measurements from the heat transfer system, determine the target flow rate and issue commands back to the heat transfer system to adjust the flow rate. This would reduce the cost of the electronics that would need to be installed locally to the heat transfer system, but would result in control being lost in the event that communication links with the central server were lost, and would increase the amount of data that would need to be transferred to and from the central server.

While certain arrangements have been described, the arrangements have been presented by way of example only, and are not intended to limit the scope of the invention.

Indeed, the novel methods and devices described herein may be embodied in a variety of other forms; furthermore, various changes in the form of the methods and systems may be made within the scope of the invention as defined by the appended claims.

**Claims**

1.  A control system for a heat transfer system, the control system comprising:

    an input (144) for receiving one or more signals indicating a flow rate of heat transfer fluid within the heat transfer system and an amount of heat transferred between the heat transfer fluid and a medium being heated or cooled, the one or more signals comprising signals indicating an input temperature of the heat transfer fluid into the heat transfer system, an output temperature of the heat transfer fluid out of the heat transfer system and a temperature of the medium;
    an output (144) for issuing control signals to change the flow rate within the heat transfer system; and
    a controller configured (142) to:

    determine a target output temperature for the heat transfer fluid for achieving a predefined amount of usable heat transferred between the heat transfer system and the medium based on the one or more received signals;
    determine a target flow rate for achieving the target output temperature, including:

    determining (220) the power transferred between the heat transfer system and the medium based on the flow rate, the input temperature, the output temperature and a specific heat capacity of the heat transfer fluid;
    determining a temperature difference between the fluid and the medium;
    determining (230) the thermal resistance of the medium based on the temperature difference and the power; and
    determining (270) the target flow rate based on the power and the thermal resistance; and

    issue a control signal (280) via the output terminal (144) to adjust the flow rate within the heat transfer system to set the flow rate to the target flow rate to achieve the target output temperature.

2.  A control system according to claim 1 wherein the temperature difference is a difference between an average temperature of the fluid within the system and the temperature of the medium.

3.  A control system according to claim 1 or claim 2 wherein determining the target flow rate comprises:

    determining (250) a target output temperature based on the input temperature, the temperature of the medium and the predefined amount of usable heat;
    determining a target temperature difference between the heat transfer fluid and the medium, the target temperature difference preferably being determined based on the input temperature, the target output temperature and the temperature of the medium; and
    determining (260) a target amount of power to be transferred between the heat transfer fluid and the medium based on the target temperature difference and the target output temperature,
    wherein the target flow rate is determined (270) based on the target amount of power to be transferred, the input temperature, the target output temperature and the specific heat capacity of the heat transfer fluid.

4.  A control system according to any preceding claim wherein the predefined amount is a predefined fraction of usable heat.

5.  A control system according to any preceding claim, wherein the heat transfer system is connected to a fluid source that provides the heat transfer fluid and controls the input temperature of the heat transfer fluid, and wherein the controller (142) is further configured to:

    determine whether the input temperature of the heat transfer fluid needs to be increased or decreased; and
    in response to determining that the input temperature should be increased, issue a request to the fluid source to increase the input temperature; or
    in response to determining that the input temperature should be decreased, issue a request to the fluid source to decrease the input temperature.

6.  A control system according to claim 5, wherein the controller (142) is configured to:

determine that the input temperature needs to be increased in response to a determination that the input temperature is below a first predetermined target input temperature; or
determine that the input temperature needs to be decreased in response to a determination that the input temperature is above a second predetermined target input temperature.

7. A control system according to claim 6 wherein:

the input (144) is configured to receive a signal indicating an external temperature;
the controller (142) is configured to determine the target input temperature based on the external temperature; and
the request to the fluid source comprises a request to increase or decrease the input temperature at least to the target input temperature.

8. A control system according to any of claims 5-7, wherein:

the heat transfer system comprises a plurality of heat transfer subsystems;
the control system is in communicative communication with a number of downstream control systems, wherein each downstream control system is configured to control a respective heat transfer subsystem; and
the controller is configured to determine that the input temperature should be increased or decreased in response to the controller receiving a request to increase or decrease the input temperature from one of the downstream control systems.

9. A control system according to claim 8, wherein the heat transfer system is a heating system and the controller (142) is configured to:

receive from one or more of the downstream control systems, one or more corresponding requests to increase the input temperature, each request comprising a requested temperature; and
in response to receiving one or more requests, determine a maximum requested temperature from the one or more requests and the target input temperature;
wherein the request to the fluid source comprises a request for at least the maximum requested temperature.

10. A control system according to claim 9 wherein the request to the fluid source comprises a request for a temperature equal to the target input temperature plus an expected temperature loss during delivery of the heat transfer fluid to the heat transfer system or minus an expected temperature gain during delivery of the heat transfer fluid to the heat transfer system, or a control system according to claim 12 wherein the request to the fluid source comprises a request for a temperature equal to the maximum requested temperature plus an expected temperature loss during delivery of the heat transfer fluid to the heat transfer system.

11. A control system according to claim 8, wherein the heat transfer system is a cooling system and the controller is configured to:

receive from one or more of the downstream control systems, one or more corresponding requests to decrease the input temperature, each request comprising a requested temperature; and
in response to receiving one or more requests, determine a minimum requested temperature from the one or more requests and the target input temperature;
wherein the request to the fluid source comprises a request to reduce the input temperature at least to the minimum requested temperature and the request to the fluid source preferably comprises a request for a temperature equal to the minimum requested temperature minus an expected temperature gain during delivery of the heat transfer fluid to the heat transfer system.

12. A control method for a heat transfer system, the control method being performed in a control system comprising a controller (142), an input (144) for receiving signals from the heat transfer system and an output (144) for issuing control signals to change the flow rate within the heat transfer system, the control method comprising the controller (142):

receiving (210) one or more signals indicating a flow rate of heat transfer fluid within the heat transfer system and an amount of heat transferred between the heat transfer fluid and a medium being heated or cooled, the one or more signals comprising signals indicating an input temperature of the heat transfer fluid into the heat transfer system, an output temperature of the heat transfer fluid out of the heat transfer system and a temperature of the medium;

determining (250) a target output temperature for the heat transfer fluid for achieving a predefined amount of usable heat transferred between the heat transfer system and the medium based on the one or more received signals;

determining a target flow rate for achieving the target output temperature, including:

determining (220) the power transferred between the heat transfer system and the medium based on the flow rate, the input temperature, the output temperature and a specific heat capacity of the heat transfer fluid;
determining a temperature difference between the fluid and the medium;
determining (230) the thermal resistance of the medium based on the temperature difference and the power; and
determining (270) the target flow rate based on the power and the thermal resistance; and

issuing a control signal (280) to adjust the flow rate within the heat transfer system to set the flow rate to the target flow rate to achieve the target output temperature.

## Patentansprüche

1. Steuerungssystem für ein Wärmeübertragungssystem, wobei das Steuerungssystem Folgendes umfasst:

einen Eingang (144) zum Empfangen eines oder mehrerer Signale, welche eine Durchflussrate an Wärmeübertragungsfluid innerhalb des Wärmeübertragungssystems und eine Menge an zwischen dem Wärmeübertragungsfluid und einem erhitzten oder gekühlten Medium übertragener Hitze angeben, wobei das eine oder die mehreren Signale Signale umfassen, welche eine Eingangstemperatur des Wärmeübertragungsfluids in das Wärmeübertragungssystem, eine Ausgangstemperatur des Wärmeübertragungsfluids aus dem Wärmeübertragungssystem und eine Temperatur des Mediums angeben;
einen Ausgang (144) zum Ausgeben von Steuersignalen zum Ändern der Durchflussrate innerhalb des Wärmeübertragungssystems; und
eine Steuerung (142), welche konfiguriert ist zum:

Bestimmen einer Zielausgangstemperatur für das Wärmeübertragungsfluid zum Erzielen einer vorbestimmten Menge an verwendbarer übertragener Wärme zwischen dem Wärmeübertragungssystem und dem Medium, basierend auf dem einen oder den mehreren empfangenen Signalen;
Bestimmen einer Zieldurchflussrate zum Erzielen der Zielausgangstemperatur, Folgendes einschließend:

Bestimmen (220) der zwischen dem Wärmeübertragungssystem und dem Medium übertragenen Energie, basierend auf der Durchflussrate, der Eingangstemperatur, der Ausgangstemperatur und einer spezifischen Wärmekapazität des Wärmeübertragungsfluids;
Bestimmen einer Temperaturdifferenz zwischen dem Fluid und dem Medium;
Bestimmen (230) des thermischen Widerstandes des Mediums, basierend auf der Temperaturdifferenz und der Energie; und
Bestimmen (270) der Zieldurchflussrate, basierend auf der Energie und dem thermischen Widerstand; und
Ausgeben eines Steuersignals (280) über das Ausgangs-Endgerät (144) zum Anpassen der Durchflussrate innerhalb des Wärmeübertragungssystems, um die Durchflussrate auf die Zieldurchflussrate zwecks Erzielung der Zielausgangstemperatur einzustellen.

2. Steuerungssystem nach Anspruch 1, wobei die Temperaturdifferenz eine Differenz zwischen einer mittleren Temperatur des Fluids innerhalb des Systems und der Temperatur des Mediums ist.

3. Steuerungssystem nach Anspruch 1 oder 2, wobei Bestimmen der Zieldurchflussrate Folgendes umfasst:

Bestimmen (250) einer Zielausgangstemperatur, basierend auf der Eingangstemperatur, der Temperatur des Mediums und der vorbestimmten Menge an verwendbarer Wärme;
Bestimmen einer Zieltemperaturdifferenz zwischen dem Wärmeübertragungsfluid und dem Medium, wobei die Zieltemperaturdifferenz vorzugsweise basierend auf der Eingangstemperatur, der Zielausgangstemperatur und der Temperatur des Mediums bestimmt wird; und

Bestimmen (260) einer Zielmenge an Energie, welche zwischen dem Wärmeübertragungsfluid und dem Medium übertragen werden soll, basierend auf der Zieltemperaturdifferenz und der Zielausgangstemperatur,
wobei die Zieldurchflussrate basierend auf der Zielmenge an zu übertragender Energie, der Eingangstemperatur, der Zielausgangstemperatur und der spezifischen Wärmekapazität des Wärmeübertragungsfluids bestimmt (270) wird.

4. Steuerungssystem nach einem der vorhergehenden Ansprüche, wobei die vorbestimmte Menge ein vorbestimmter Anteil an verwendbarer Wärme ist.

5. Steuerungssystem nach einem der vorhergehenden Ansprüche, wobei das Wärmeübertragungssystem mit einer Fluidquelle verbunden ist, welche das Wärmeübertragungsfluid bereitstellt und die Eingangstemperatur des Wärmeübertragungsfluids steuert, und wobei die Steuerung (142) ferner konfiguriert ist zum:

Bestimmen, ob die Eingangstemperatur des Wärmeübertragungsfluids erhöht oder verringert werden muss; und
in Reaktion auf Bestimmen, dass die Eingangstemperatur erhöht werden sollte, Ausgeben einer Anforderung an die Fluidquelle zum Erhöhen der Eingangstemperatur; oder
in Reaktion auf Bestimmen, dass die Eingangstemperatur verringert werden sollte, Ausgeben einer Anforderung an die Fluidquelle zum Verringern der Eingangstemperatur.

6. Steuerungssystem nach Anspruch 5, bei welchem die Steuerung (142) konfiguriert ist zum:

Bestimmen, dass die Eingangstemperatur erhöht werden soll in Reaktion auf eine Bestimmung der Tatsache, dass die Eingangstemperatur eine erste vorbestimmte Zieleingangstemperatur unterschreitet; oder
Bestimmen, dass die Eingangstemperatur verringert werden soll in Reaktion auf eine Bestimmung der Tatsache, dass die Eingangstemperatur eine zweite vorbestimmte Zieleingangstemperatur überschreitet.

7. Steuerungssystem nach Anspruch 6, wobei:

der Eingang (144) konfiguriert ist, um ein Signal zu empfangen, welches eine Außentemperatur angibt;
das Steuergerät (142) konfiguriert ist, um die Zieleingangstemperatur basierend auf der Außentemperatur zu bestimmen; und
die Anforderung an die Fluidquelle eine Anforderung zum Erhöhen oder Verringern der Eingangstemperatur mindestens auf die Zieleingangstemperatur umfasst.

8. Steuerungssystem nach einem der Ansprüche 5 bis 7, wobei:

das Wärmeübertragungssystem eine Vielzahl von Wärmeübertragung-Teilsystemen umfasst;
das Steuerungssystem in kommunikativer Kommunikation mit einer Anzahl von nachgelagerten Steuerungssystemen steht, wobei jedes nachgelagerte Steuerungssystem konfiguriert ist, um ein jeweiliges Wärmeübertragung-Teilsystem zu steuern; und
die Steuerung konfiguriert ist, um zu bestimmen, dass die Eingangstemperatur erhöht oder verringert werden sollte in Reaktion auf die Tatsache, dass die Steuerung eine Anforderung zum Erhöhen oder Verringern der Eingangstemperatur von einem der nachgelagerten Steuerungssysteme erhält.

9. Steuerungssystem nach Anspruch 8, wobei das Wärmeübertragungssystem ein Heizsystem ist, und die Steuerung (142) konfiguriert ist zum:

Empfangen, von einem oder mehreren nachgelagerten Steuerungssystemen, einer oder mehrerer entsprechender Anforderungen zum Erhöhen der Eingangstemperatur, wobei jede Anforderung eine angeforderte Temperatur umfasst; und
in Reaktion auf den Empfang einer oder mehrere Anforderungen, Bestimmen einer angeforderten Maximaltemperatur aus der einen oder den mehreren Anforderungen und der Zieleingangstemperatur;
wobei die Anforderung an die Fluidquelle eine Anforderung von mindestens der angeforderten Maximaltemperatur umfasst.

10. Steuerungssystem nach Anspruch 9, wobei die Anforderung an die Fluidquelle eine Anforderung einer Temperatur gleich der Zieleingangstemperatur plus einem erwarteten Temperaturverlust im Zuge der Zuführung des Wärmeübertragungsfluids an das Wärmeübertragungssystem, oder minus einem erwarteten Temperaturzuwachs im Zuge der Zuführung des Wärmeübertragungsfluids an das Wärmeübertragungssystem umfasst, oder Steuerungssystem nach Anspruch 12, wobei die Anforderung an die Fluidquelle eine Anforderung einer Temperatur gleich der angeforderten Maximaltemperatur plus einem erwarteten Temperaturverlust im Zuge der Zuführung des Wärmeübertragungsfluids an das Wärmeübertragungssystem umfasst.

11. Steuerungssystem nach Anspruch 8, wobei das Wärmeübertragungssystem ein Kühlsystem ist, und die Steuerung konfiguriert ist zum:

Empfangen, von einem oder mehreren nachgelagerten Steuerungssystemen, einer oder mehrerer entsprechender Anforderungen zum Verringern der Eingangstemperatur, wobei jede Anforderung eine angeforderte Temperatur umfasst; und

in Reaktion auf den Empfang einer oder mehrerer Anforderungen, Bestimmen einer angeforderten Minimaltemperatur aus der einen oder den mehreren Anforderungen und der Zieleingangstemperatur;

wobei die Anforderung an die Fluidquelle eine Anforderung zum Verringern der Eingangstemperatur mindestens auf die angeforderte Minimaltemperatur umfasst, und die Anforderung an die Fluidquelle vorzugsweise eine Anforderung einer Temperatur gleich der angeforderten Minimaltemperatur minus einem erwarteten Temperaturzuwachs im Zuge der Zuführung des Wärmeübertragungsfluids an das Wärmeübertragungssystem umfasst.

12. Steuerungsverfahren für ein Wärmeübertragungssystem, wobei das Steuerungsverfahren in einem Steuerungssystem durchgeführt wird, umfassend eine Steuerung (142), einen Eingang (144) zum Empfangen von Signalen von dem Wärmeübertragungssystem und einen Ausgang (144) zum Ausgeben von Steuersignalen zum Ändern der Durchflussrate innerhalb des Wärmeübertragungssystems, wobei das Steuerungsverfahren die Steuerung (142) umfasst, zum:

Empfangen (210) eines oder mehrerer Signale, welche eine Durchflussrate an Wärmeübertragungsfluid innerhalb des Wärmeübertragungssystems und eine Menge an zwischen dem Wärmeübertragungsfluid und einem erhitzten oder gekühlten Medium übertragener Hitze angeben, wobei das eine oder die mehreren Signale Signale umfassen, welche eine Eingangstemperatur des Wärmeübertragungsfluids in das Wärmeübertragungssystem, eine Ausgangstemperatur des Wärmeübertragungsfluids aus dem Wärmeübertragungssystem und eine Temperatur des Mediums angeben;

Bestimmen (250) einer Zielausgangstemperatur für das Wärmeübertragungsfluid zum Erzielen einer vorbestimmten Menge an verwendbarer übertragener Wärme zwischen dem Wärmeübertragungssystem und dem Medium, basierend auf dem einen oder den mehreren empfangenen Signalen;

Bestimmen einer Zieldurchflussrate zum Erzielen der Zielausgangstemperatur, Folgendes einschließend:

Bestimmen (220) der zwischen dem Wärmeübertragungssystem und dem Medium übertragenen Energie, basierend auf der Durchflussrate, der Eingangstemperatur, der Ausgangstemperatur und einer spezifischen Wärmekapazität des Wärmeübertragungsfluids;

Bestimmen einer Temperaturdifferenz zwischen dem Fluid und dem Medium;

Bestimmen (230) des thermischen Widerstandes des Mediums, basierend auf der Temperaturdifferenz und der Energie; und

Bestimmen (270) der Zieldurchflussrate, basierend auf der Energie und dem thermischen Widerstand; und

Ausgeben eines Steuersignals (280) zum Anpassen der Durchflussrate innerhalb des Wärmeübertragungssystems, um die Durchflussrate auf die Zieldurchflussrate zwecks Erzielung der Zielausgangstemperatur einzustellen.

## Revendications

1. Système de commande pour un système de transfert de chaleur, le système de commande comprenant :

une entrée (144) pour recevoir un ou plusieurs signaux indiquant un débit d'un fluide caloporteur à l'intérieur du système de transfert de chaleur et une quantité de chaleur transférée entre le fluide caloporteur et un milieu chauffé ou refroidi, le un ou plusieurs signaux comprenant des signaux indiquant une température d'entrée du fluide caloporteur dans le système de transfert de chaleur, une température de sortie du fluide caloporteur hors du système de transfert de chaleur et une température du milieu,

une sortie (144) pour émettre des signaux de commande pour modifier le débit à l'intérieur du système de transfert de chaleur, et
un dispositif de commande (142) configuré pour :

déterminer une température de sortie cible pour le fluide caloporteur pour obtenir une quantité prédéfinie de chaleur utilisable transférée entre le système de transfert de chaleur et le milieu sur la base du un ou plusieurs signaux reçus,
déterminer un débit cible pour atteindre la température de sortie cible incluant les étapes consistant à :

déterminer (220) l'énergie transférée entre le système de transfert de chaleur et le milieu sur la base du débit, de la température d'entrée, de la température de sortie et d'une capacité calorifique spécifique du fluide caloporteur,
déterminer une différence de température entre le fluide et le milieu,
déterminer (230) la résistance thermique du milieu sur la base de la différence de température et de l'énergie, et
déterminer (270) le débit cible sur la base de l'énergie et de la résistance thermique, et
émettre un signal de commande (280) via la borne de sortie (144) pour ajuster le débit à l'intérieur du système de transfert de chaleur pour régler le débit au débit cible pour obtenir la température de sortie cible.

2. Système de commande selon la revendication 1, dans lequel la différence de température est une différence entre une température moyenne du fluide à l'intérieur du système et la température du milieu.

3. Système de commande selon la revendication 1 ou 2, dans lequel la détermination du débit cible comprend les étapes consistant à :

déterminer (250) une température de sortie cible sur la base de la température d'entrée, la température du milieu et la quantité prédéfinie de chaleur utilisable,
déterminer une différence de température cible entre le fluide caloporteur et le milieu, la différence de température cible étant déterminée de préférence sur la base de la température d'entrée, la température de sortie cible et la température du milieu, et
déterminer (260) une quantité cible d'énergie à transférer entre le fluide caloporteur et le milieu sur la base de la différence de température cible et la température de sortie cible,
dans lequel le débit cible est déterminé (270) sur la base de la quantité cible d'énergie à transférer, la température d'entrée, la température de sortie cible et la capacité calorifique spécifique du fluide caloporteur.

4. Système de commande selon l'une quelconque des revendications précédentes, dans lequel la quantité prédéfinie est une fraction prédéfinie de la chaleur utilisable.

5. Système de commande selon l'une quelconque des revendications précédentes, dans lequel le système de transfert de chaleur est raccordé à une source de fluide qui fournit le fluide caloporteur et commande la température d'entrée du fluide caloporteur, et dans lequel le dispositif de commande (142) est configuré en outre pour :

déterminer si la température d'entrée du fluide caloporteur a besoin d'être augmentée ou diminuée, et
en réponse à la détermination du fait que la température d'entrée doit être augmentée, émettre une requête à la source de fluide pour augmenter la température d'entrée, ou
en réponse à la détermination du fait que la température d'entrée doit être diminuée, émettre une requête à la source de fluide pour diminuer la température d'entrée.

6. Système de commande selon la revendication 5, dans lequel le dispositif de commande (142) est configuré pour :

déterminer que la température d'entrée a besoin d'être augmentée en réponse à une détermination du fait que la température d'entrée est inférieure à une première température d'entrée cible prédéterminée, ou
déterminer que la température d'entrée a besoin d'être diminuée en réponse à une détermination du fait que la température d'entrée est supérieure à une seconde température d'entrée cible prédéterminée.

7. Système de commande selon la revendication 6, dans lequel :

l'entrée (144) est configurée pour recevoir un signal indiquant une température extérieure,
le dispositif de commande (142) est configuré pour déterminer la température d'entrée cible sur la base de la température extérieure, et

la requête à la source de fluide comprend une requête pour augmenter ou diminuer la température d'entrée au moins jusqu'à la température d'entrée cible.

8. Système de commande selon l'une quelconque des revendications 5 à 7, dans lequel :

le système de transfert de chaleur comprend une pluralité de sous-systèmes de transfert de chaleur, le système de commande est en communication communicative avec un nombre de systèmes de commande en aval, dans lequel chaque système de commande en aval est configuré pour commander un sous-système de transfert de chaleur respectif, et le dispositif de commande est configuré pour déterminer que la température d'entrée doit être augmentée ou diminuée en réponse à une réception par le dispositif de commande d'une requête pour augmenter ou diminuer la température d'entrée de la part d'un des systèmes de commande en aval.

9. Système de commande selon la revendication 8, dans lequel le système de transfert de chaleur est un système de chauffage et le dispositif de commande (142) est configuré pour :

recevoir de la part d'un ou plusieurs systèmes de commande en aval une ou plusieurs requêtes correspondantes pour augmenter la température d'entrée, chaque requête comprenant une température requise, et en réponse à la réception d'une ou plusieurs requêtes, déterminer une température maximale requise à partir de la une ou plusieurs requêtes et la température d'entrée cible, dans lequel la requête à la source de fluide comprend une requête pour au moins la température maximale requise.

10. Système de commande selon la revendication 9, dans lequel la requête à la source de fluide comprend une requête pour une température égale à la température d'entrée cible plus une perte de température attendue pendant la distribution du fluide caloporteur au système de transfert de chaleur ou moins un gain de température attendu pendant la distribution du fluide caloporteur au système de transfert de chaleur, ou système de commande selon la revendication 12, dans lequel la requête à la source de fluide comprend une requête pour une température égale à la température maximale requise plus une perte de température attendue pendant la distribution du fluide caloporteur au système de transfert de chaleur.

11. Système de commande selon la revendication 8, dans lequel le système de transfert de chaleur est un système de refroidissement et le dispositif de commande est configuré pour :

recevoir, de la part d'un ou de plusieurs systèmes de commande en aval, une ou plusieurs requêtes correspondantes pour diminuer la température d'entrée, chaque requête comprenant une température requise, et en réponse à la réception d'une ou plusieurs requêtes, déterminer une température minimale requise à partir de la une ou plusieurs requêtes et la température d'entrée cible, dans lequel la requête à la source de fluide comprend une requête pour réduire la température d'entrée au moins à la température minimale requise et la requête à la source de fluide comprend de préférence une requête pour une température égale à la température minimale requise moins un gain de température attendu pendant la distribution du fluide caloporteur au système de transfert de chaleur.

12. Procédé de commande pour un système de transfert de chaleur, le procédé de commande étant exécuté dans un système de commande comprenant un dispositif de commande (142), une entrée (144) pour recevoir des signaux du système de transfert de chaleur et une sortie (144) pour émettre des signaux de commande pour modifier le débit à l'intérieur du système de transfert de chaleur, le procédé de commande comprenant le dispositif de commande (142) pour :

recevoir (210) un ou plusieurs signaux indiquant un débit d'un fluide caloporteur à l'intérieur du système de transfert de chaleur et une quantité de chaleur transférée entre le fluide caloporteur et un milieu chauffé ou refroidi, le un ou plusieurs signaux comprenant des signaux indiquant une température d'entrée du fluide caloporteur dans le système de transfert de chaleur, une température de sortie du fluide caloporteur hors du système de transfert de chaleur et une température du milieu, déterminer (250) une température de sortie cible pour le fluide caloporteur pour obtenir une quantité prédéfinie de chaleur utilisable transférée entre le système de transfert de chaleur et le milieu sur la base du un ou plusieurs signaux reçus, déterminer un débit cible pour atteindre la température de sortie cible incluant les étapes consistant à :

déterminer (220) l'énergie transférée entre le système de transfert de chaleur et le milieu sur la base du débit, de la température d'entrée, de la température de sortie et d'une capacité calorifique spécifique du fluide caloporteur,
déterminer une différence de température entre le fluide et le milieu,
déterminer (230) la résistance thermique du milieu sur la base de la différence de température et de l'énergie, et
déterminer (270) le débit cible sur la base de l'énergie et de la résistance thermique, et

émettre un signal de commande (280) pour ajuster le débit à l'intérieur du système de transfert de chaleur pour régler le débit au débit cible pour obtenir la température de sortie cible.

Fig. 1

Fig. 2

128 — Flow Rate Sensor

132 — Inlet Valve

124 — Pump

134 — External Temperature Sensor

126 — Flow Temperature Sensor

130 — Return Temperature Sensor

136 — Region Temperature Sensor

Input/ Output Interface 144

Memory 146

Controller 142

140

160 — Lower Control Systems

110 — Boiler/Higher Control Systems

150 — Central Server

Fig. 3

Fig. 4

Outside Temperature (°C)

Flow Temperature (°C)

Fig. 5

**EP 3 492 822 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150122475 A1
- WO 2008039065 A1